# EUROPÄISCHE PATENTSCHRIFT

(11) **EP 1 213 186 B1**
(45) Veröffentlichungstag und Bekanntmachung des Hinweises auf die Patenterteilung: **09.01.2008**
(21) Anmeldenummer: 01126160.9
(22) Anmeldetag: 03.11.2001
(51) Int. Cl.: B60R 13/02, B60R 11/00, B62D 29/04, F16B 5/02

(54) **Vorrichtung zum Befestigen von zwei Bauteilen**
Device for attaching two parts together
Dispositif de fixation de deux pièces entre-elles

(30) Priorität: 07.12.2000 DE 10060782
(43) Veröffentlichungstag der Anmeldung: 12.06.2002
(73) Patentinhaber: Bayerische Motoren Werke Aktiengesellschaft, 80809 München (DE)
(72) Erfinder: Boden, Michael, 84100 Niederaichbach (DE); Maier, Anja, 84034 Landshut (DE)

(56) Entgegenhaltungen:
- EP-A- 0 799 759
- FR-A- 2 759 744
- FR-A- 2 784 955
- FR-A- 2 796 674

## Beschreibung

Die Erfindung betrifft eine Vorrichtung zum Befestigen von zwei Bauteilen gemäß dem Oberbegriff des Anspruchs 1.

Es ist bereits im Fahrzeugbau bekannt, Verkleidungsteile aus Kunststoff an Trägerbauteilen zu befestigen. Kunststoffbauteile haben jedoch den Nachteil, dass diese sich aufgrund von mechanischen und/oder thermischen Belastungen verformen. Wird ein solches Bauteil bei einer Längenausdehnung durch ein Befestigungselement an seiner Ausdehnung gehindert, wird die Ausdehnung in eine elastische und/oder plastische Verformung des Bauteils umgesetzt. Diese Verformung hat zur Folge, dass das Bauteil sich an der Verformungsstelle beispielsweise wölbt und/oder dass das Befestigungselement verformt oder zerstört wird.

Ferner sind Gleitelemente bekannt, durch die ein Toleranzausgleich an den Befestigungsstellen möglich ist. Die bekannten Gleitelemente sind in der Regel für den jeweiligen Belastungsfall ausgelegt und erfordern einen hohen Montageaufwand.

Aus der FR-A-2 759 744 ist bereits ein gattungsbildendes Kunststoffteil bekannt, das gleitend an einem Tragteil eines Kraftfahrzeuges befestigt werden kann. Das Kunststoffteil und das Tragteil weisen jeweils eine Durchgangsöffnung auf, durch die ein Befestigungselement hindurchgeführt ist, das die beiden Bauteile miteinander verbindet. An der Durchgangsöffnung sind zwei gegenüberliegende Anlageflächen für eine Distanzhülse ausgebildet, wobei die Anlageflächen durch jeweils einen in die Durchgangsöffnung vorstehenden Wandabschnitt gebildet sind. Beim Andrehen eines als Schraube ausgebildeten Befestigungselementes wird die Distanzhülse in die Befestigungsposition in der Durchgangsöffnung gebracht. Die Distanzhülse wird somit durch Reibschluss an den Anlageflächen gehaltert. In Längsrichtung ist zwischen der Distanzhülse und der Durchgangsöffnung beidseitig jeweils ein Freiraum ausgebildet.

Aus der EP-A-0 799 759 ist die Befestigung eines Kunststoffflügels auf einem Metallträger mittels einer Befestigungsvorrichtung und einer Schraube vorbekannt. Die Befestigungsvorrichtung besteht aus einem Profilteil, einem Gleitstück, das auf der Unterseite des Profilteils verschiebbar montiert ist und einem U-förmigen Bügel, dessen seitliche, abstehenden Abschnitte in Schlitzen, die in dem Gleitstück ausgebildet sind, geführt sind. Eine Schraube wird bei der Montage durch eine im Metallträger ausgebildete Durchgangsöffnung hindurchgeführt und in einem Innengewinde einer Durchgangsöffnung verschraubt, die in dem U-förmigen Bügel ausgebildet ist. Im befestigten Zustand erstreckt sich die Schraube in eine Durchgangsöffnung, die in dem Gleitstück vorgesehen ist. Ferner ist ein Federelement vorgesehen, das zwischen dem Gleitstück und dem Profilteil vorgesehen ist und eine Relativverschiebung des Profilteils zum Gleitstück bewirkt.

Aus der FR-A-2 784 955 ist bereits die Befestigung einer Karosserieaußenhaut, beispielsweise eines Kotflügels, an einem Karosserie-Tragteil bekannt. An einer Innenfläche der Karosserie-Außenhaut ist mindestens ein in Richtung des Karosserie-Tragteils vorstehendes Befestigungsbauteil angeordnet. Gegenüber dem jeweiligen vorstehenden Befestigungsbauteil ist im Karosserie-Tragteil ein Befestigungsbauteil mit einer Befestigungsöffnung vorgesehen. Am Rand der Befestigungsöffnung sind drei Anlageflächen zur Halterung des vorstehenden Befestigungsbauteils ausgebildet. Das vorstehende Befestigungsbauteil wird bei der Montage der Karosserieaußenhaut an dem Karosserietragteil in die Befestigungsöffnung des Befestigungsbauteils eingeführt und dort über die Anlageflächen durch Formschluss und Reibschluss gehaltert.

Aufgabe der Erfindung ist es, eine Vorrichtung zum Befestigen von zwei Bauteilen zu schaffen, bei denen ein Längenausgleich in einfacher Weise möglich ist.

Diese Aufgabe wird durch die Merkmale des Anspruchs 1 gelöst.

Bei der erfindungsgemäßen Vorrichtung ist bei einem durch mechanische und/oder thermische Belastung verformbaren Bauteil eine Aussparung ausgebildet, die einerseits Anlageflächen zur Halterung einer Distanzhülse aufweist und die andererseits in Richtung einer sich einstellenden Längenausdehnung einen erforderlichen Spielraum aufweist.

Die Anlageflächen sind vorteilhafterweise senkrecht zur sich einstellenden Längenausdehnung an gegenüberliegenden Seiten der Aussparung ausgebildet. Zur Erhöhung einer Klemmwirkung weisen die Anlageflächen seitliche Arme auf, die bei der Montage der Distanzhülse elastisch nachgeben und die Außenoberfläche der Distanzhülse umgreifen. In einer vorteilhaften Ausführungsform liegt eine Presspassung zwischen dem verformbaren Bauteil und der Distanzhülse vor. Die Arme können in einfacher Weise durch einen Hinterschnitt an den in die Aussparung ragenden Anlageflächen hergestellt werden.

In einer vorteilhaften Ausführungsform sind die Arme der Anlageflächen aus einem Werkstoff hergestellt, der eine höhere Dehnung als der Werkstoff zulässt, aus dem das restliche Bauteil besteht.

In einer vorteilhaften Ausführungsform ist das längenveränderliche Bauteil aus Kunststoff hergestellt. Von Vorteil ist die Verwendung eines thermoplastischen Kunststoffes, da thermoplastische Kunststoffe einfach recyclebar sind. Auch die übrigen Bauteile der erfindungsgemäßen Vorrichtung, d. h. die Distanzhülse, die Beilagscheibe, die Schraube können aus einem thermoplastischen Kunststoff hergestellt sein und/oder aus Metall bestehen.

Die erfindungsgemäße Vorrichtung kann vorteilhafterweise zur Befestigung einer Karosserie - Außenhaut an einer Tragstruktur eines Kraftfahrzeuges eingesetzt werden. Eine solche Außenhaut ist beispielsweise ein Kotflügel oder ein Dachabschnitt.

Eine Ausführungsform der Erfindung wird nachstehend anhand der Zeichnungen beispielshalber beschrieben. Dabei zeigen:
- Fig. 1: eine Draufsicht auf eine Befestigungsstelle, bei der ein längenveränderliches Bauteil während des Montagevorganges nach einer Lackierung dargestellt ist,
- Fig. 2: eine Querschnittsansicht längs der Linie I-I in der Fig. 1 der Befestigungsstelle und
- Fig. 3: eine Draufsicht auf die in der Fig. 1 gezeigte Befestigungsstelle nach einer Wasseraufnahme und/oder Wärmeausdehnung.

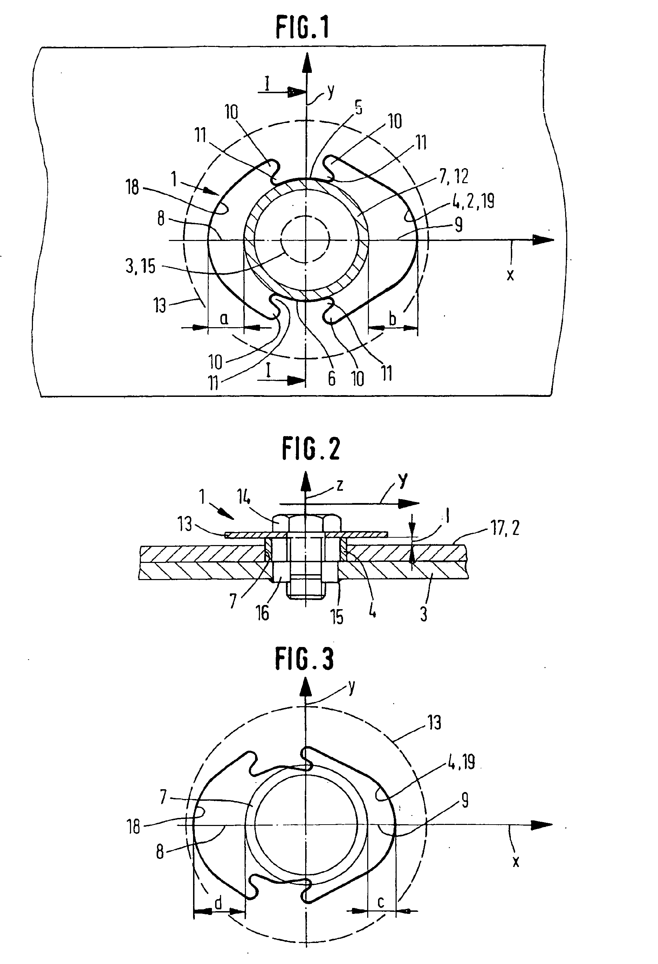

Die Fig. 1 zeigt eine Befestigungsstelle 1 zwischen einem längenveränderlichen Bauteil 2 und einer in der Fig. 2 gezeigten Tragstruktur 3. Das Bauteil 2 ist beispielsweise ein Außenhautteil einer Karosserie eines Kraftfahrzeuges und ist aus einem Kunststoff hergestellt. Insbesondere kann das Bauteil 2 ein Kotflügel sein und der Kunststoff ist ein Thermoplast. Bei der Befestigung des Bauteils 2 an einem Kraftfahrzeug liegt die Befestigungsstelle 1 in einem nicht sichtbaren Bereich, der beispielsweise durch ein Fahrzeugbauteil wie eine Motorhaube abgedeckt ist.

Die Aussparung 4 kann bereits bei der Herstellung des Bauteils 2, beispielsweise durch Spritzgießen, ausgebildet werden. Ferner kann die Aussparung 4 durch mechanische Trennverfahren in dem Bauteil 2 erzeugt werden. Wie aus den Fig. 1 und 3 hervorgeht, ist durch die Anlageflächen 5, 6 der Aussparung 4 die Montageposition festgelegt. Die Einstellung des Bauteils 2 bei einer Längenveränderung ergibt sich unabhängig von der Montageposition.

In dem Bauteil 2 ist eine Aussparung 4 ausgebildet, die zwei Funktionen hat. Zum einen sind bei der Aussparung 4 in y-Richtung zwei gegenüberliegende Anlageflächen 5 und 6 zur Halterung einer Distanzhülse 7 ausgebildet und zum anderen weist die Aussparung 4 in der dazu senkrechten x-Richtung, d. h. in Richtung einer sich einstellenden Längenveränderlichkeit, beidseitig zu der Hülse 7 einen vorgegebenen Freiraum oder ein Spiel 8, 9 auf. Das Spiel 8, 9 ist so ausgelegt, dass dessen Abmessungen a und b größer sind als die maximal sich einstellende Längenveränderung.

An den Anlageflächen 5 und 6 sind über Hinterschnitte 10 Arme 11 ausgebildet, die eine Außenoberfläche 12 der Distanzhülse 7 elastisch umgreifen. Die Arme 11 oder die gesamte Anlagenfläche 5, 6 kann aus einem Werkstoff hergestellt sein, der eine höhere Dehnung zulässt als der Werkstoff des übrigen Bauteils 2. In der Fig. 1 ist in gestrichelten Linien eine Beilagscheibe 13 dargestellt, die die Aussparung 4 überdeckt.

In der Fig. 1 ist das Spiel 9 mit dem Abstand b größer als das Spiel 8 mit dem Abstand a. In dem in der Fig. 1 gezeigten Zustand ist das Bauteil 2 bereits lackiert. Durch den Wärmeeinfluß bei der Lackierung wird dem Bauteil 2 Wasser entzogen. Zusätzlich oder alternativ kann in einem der Lackierung nachgeschalteten Bearbeitungsvorgang das Bauteil 2 mit Wärme behandelt werden, so dass die endgültige Form entsteht. Bei dieser Wärmebehandlung wird ebenfalls dem Bauteil 2 Wasser entzogen und das Bauteil 2 wird dadurch verkürzt.

Wie aus der Fig.3 hervorgeht, dehnt sich durch die Wasseraufnahme nach den genannten Wärmebehandlungen das Bauteil 2 in x-Richtung so aus, dass sich das Spiel 8 von dem in der Fig. 1 eingezeichneten Abstand a auf einen Betrag d vergrößert und das Spiel 9 sich von einem Betrag b auf einen Betrag c verkleinert. Die Aussparung 4 weist in x-Richtung jeweils eine kreisförmige Abrundung 18 und 19 auf, die jeweils als Anschlag dient. Durch die kreisförmige Abrundungen 18, 19 ergeben sich bei einer Anlage der Distanzhülse 7 an den Abrundungen 18, 19 eine flächige Abstützung mit einer gleichmäßigen Kraftverteilung.

Die Fig. 2 zeigt die Befestigungsstelle 1, bei der ein als Schraube ausgebildetes Befestigungselement 14 durch die Beilagscheibe 13, die Distanzhülse 7, die in dem Bauteil 2 vorgesehene Aussparung 4 und durch eine Aussparung 15 hindurchgeführt ist, die in der Tragstruktur 3 ausgebildet ist. In der gezeigten Ausführungsform ist an der Aussparung 15 eine Mutter 16 angeschweißt, so dass die Schraube 14 in der Mutter 16 verschraubbar ist. Die Distanzhülse 7 steht um einen Betrag I über einer Außenoberfläche 17 des Bauteils 2 über, so dass über die Beilagscheibe 13 kein Druck auf die Außenoberfläche 17 des Bauteils 2 ausgeübt werden kann.

## Patentansprüche

1. Vorrichtung zum Befestigen von zwei Bauteilen (2, 3), wobei beide Bauteile (2, 3) jeweils eine Durchgangsöffnung (4, 15) aufweisen, durch die ein Befestigungselement (14) hindurchgeführt ist, das die beiden Bauteile (2, 3) miteinander verbindet,
wobei das eine Bauteil (2) durch mechanische und/oder thermische Belastung längenveränderlich ist und aus einem Kunststoff besteht,
wobei die Durchgangsöffnung (4) des Bauteils (2) zwei gegenüberliegende Anlageflächen (5, 6) aufweist,
an den Anlageflächen (5, 6) seitliche Arme (11) ausgebildet sind, die bei der Montage einer Distanzhülse (7) elastisch nachgeben, und
wobei in der Durchgangsöffnung (4) in Richtung einer Längenausdehnung ein Freiraum (8, 9) vorgesehen ist, **dadurch gekennzeichnet, dass** die seitlichen Arme (11) eine Außenoberfläche (12) der Distanzhülse (7) umgreifen und haltern.

2. Vorrichtung nach Anspruch 1,
**dadurch gekennzeichnet, dass** eine Beilagscheibe (13) auf der Distanzhülse (7) aufliegt, die zum einen die Durchgangsöffnung (4) zumindest teilweise überdeckt und die zum anderen von einer Außenoberfläche (17) des Bauteils (2) um einen Betrag (I) beabstandet ist.

3. Vorrichtung nach den Ansprüchen 1 oder 2,
**dadurch gekennzeichnet, dass** das zweite Bauteil eine formstabile Tragstruktur (3) ist.

4. Vorrichtung nach einem der vorhergehenden Ansprüche,
**dadurch gekennzeichnet, dass** das Bauteil (2) ein Außenhautteil einer Karosserie eines Kraftfahrzeuges und das andere Bauteil (3) die Tragstruktur eines Kraftfahrzeuges ist.

5. Vorrichtung nach einem der vorhergehenden Ansprüche,
**dadurch gekennzeichnet, dass** zumindest die Arme (11) und/oder die gesamte, jeweilige Anlagefläche (5, 6) aus einem Werkstoff hergestellt ist, der eine höhere Dehnung zulässt als der übrige Werkstoff des Bauteils (2).

6. Vorrichtung nach einem der vorhergehenden Ansprüche,
**dadurch gekennzeichnet, dass** die Distanzhülse (7), die Beilagscheibe (13), das Befestigungselement (14) als ein Normteil aus Metall und/oder aus Kunststoff besteht.

7. Vorrichtung nach einem der vorhergehenden Ansprüche,
**dadurch gekennzeichnet, dass** die Aussparung (4) in Richtung der Längenausdehnung des verformbaren Bauteils (2) beidseitig jeweils eine kreisförmige Abrundung (18, 19) aufweist.

## Claims

1. A device for fastening two components (2, 3), wherein each component (2, 3) has a passage opening (4, 15) for inserting a fastening element (14) for connecting the two components (2, 3),
wherein one component (2) is variable in length by mechanical and/or thermal stress and is made of plastics material,
wherein the passage opening (4) in the component (2) has two opposite abutment surfaces (5, 6),
arms (11) are formed on the sides of the abutment surfaces (5, 6) and elastically yield when a spacer sleeve is fitted, and
wherein a space (8, 9) is provided in the passage opening (4) in the direction of longitudinal expansion, **characterised in that**
the lateral arms (11) surround an outer surface (12) of the spacer sleeve (7) and hold it.

2. A device according to claim 1,
**characterised in that** a washer (13) rests on the sleeve (7) and at least partly covers the passage opening (4) but is separated from an outer surface (17) of the component (2) by a distance (I).

3. A device according to claim 1 or claim 2,
**characterised in that** the second component is a dimensionally stable bearing structure (3).

4. A device according to any of the preceding claims,
**characterised in that** the component (2) is a skin part of a vehicle body and the other component (3) is the bearing structure of a vehicle.

5. A device according to any of the preceding claims,
**characterised in that** at least the arms (11) and/or each complete abutment surface (5, 6) is made of a material which is more stretchable than the rest of the material constituting the component (2).

6. A device according to any of the preceding claims,
**characterised in that** the sleeve (7), the washer (13) and the fastening element (14) are standard parts made of metal and/or plastics material.

7. A device according to any of the preceding claims,
**characterised in that** the recess (4) has a circular part (18, 19) on each side in the direction of longitudinal expansion of the deformable component (2).

## Revendications

1. Dispositif pour fixer deux pièces 2, 3 comportant chacune un orifice de passage 4, 15, traversé par un élément de fixation 14 reliant les deux pièces l'une à l'autre,
dont l'une 2 des pièces est en plastique et peut varier en longueur sous l'effet d'une contrainte mécanique et/ ou thermique,
l'orifice de passage 4 de la pièce 2 présentant deux surfaces de pose opposées 5, 6,
les surfaces de pose 5, 6 ayant des bras latéraux 11 ployant élastiquement lors du montage d'un manchon d'écartement 7, et
l'orifice de passage 4 ayant un espace libre 8, 9 en direction d'une dilatation longitudinale,
**caractérisé en ce que**
les bras latéraux 11 entourent et maintiennent une surface externe 12 du manchon d'écartement 7.

2. Dispositif selon la revendication 1,
**caractérisé en ce que**
sur le manchon d'écartement 7 repose une rondelle de garniture 13 qui d'une part recouvre au moins en partie l'orifice de passage 4, et d'autre part s'écarte d'une distance 1 d'une surface externe 17 de la pièce 2.

3. Dispositif selon l'une des revendications 1 ou 2,
**caractérisé en ce que**
l'autre pièce est une structure porteuse 3 rigide.

4. Dispositif selon l'une des revendications précédentes,
**caractérisé en ce que**
la pièce 2 est une peau externe de carrosserie d'un véhicule automobile, et l'autre pièce 3 est la structure porteuse du véhicule.

5. Dispositif selon l'une des revendications précédentes,
**caractérisé en ce qu'**
au moins les bras 11 et/ ou l'ensemble de chacune des surfaces de pose 5, 6 est en un matériau de dilatation plus grande que celle du reste de la pièce 2.

6. Dispositif selon l'une des revendications précédentes,
**caractérisé en ce que**
le manchon d'écartement 7, la rondelle de garniture 13 et l'élément de fixation 14 sont des pièces normalisées en métal et/ou en plastique.

7. Dispositif selon l'une des revendications précédentes,
**caractérisé en ce que**
l'orifice ou évidement 4 présente chaque fois des deux côtés un arrondi circulaire 18, 19 dans la direction de dilatation longitudinale de la pièce 2.
